# EUROPEAN PATENT SPECIFICATION

(11) **EP 2 442 660 B1**
(45) Date of publication and mention of the grant of the patent: **22.01.2014**
(21) Application number: 10723598.8
(22) Date of filing: 10.06.2010
(51) Int. Cl.: A01P 7/04, A01N 59/04, A01N 61/00, C02F 3/00, C02F 103/00, C02F 1/68

(54) **METHOD FOR PREVENTING AND CONTROLLING INSECTS THAT INFEST AQUEOUS SYSTEMS**
METHODE ZUR VERMEIDUNG UND KONTROLLE VON INSEKTEN DIE WÄSSRIGE SYSTEME BEFALLEN
MÉTHODE POUR LA PRÉVENTION ET LE CONTRÔLE DES INSECTES INFESTANT DES SYSTÈMES AQUEUX

(30) Priority: 17.06.2009 IT BO20090395
(43) Date of publication of application: 25.04.2012
(73) Proprietor: Archimede R&D S.R.L., 40127 Bologna (IT)
(72) Inventor: PANIZZA, Lucio, I-40133 Bologna (IT); RODA, Elena, I-40127 Bologna (IT); STEFAN, Alessandra, I-40134 Bologna (IT); HOCHKOEPPLER, Alejandro, I-40129 Bologna (IT)
(74) Representative: Fuochi, Riccardo
(86) International application number: PCT/EP2010/058177
(87) International publication number: WO 2010/145988

(56) References cited:
- WO-A1-98/17592
- WO-A1-02/099026
- WO-A1-2010/145905
- GB-A- 1 561 088
- DATABASE WPI Week 200946 Thomson Scientific, London, GB; AN 2009-K79125 XP002579091 & KR 2009 060 828 A (SEONG-JE C) 15 June 2009 (2009-06-15) & KR 2009 0060828 A (CHO SEONG JE [KR]) 15 June 2009 (2009-06-15)

## Description

### Technical field

The present invention relates to an eco-compatible method for preventing and controlling insects, their eggs and larvae that infest aqueous systems.

### Background Art

The struggle against organisms that infest the waters is a problem that has been known and investigated for a long time. The strategy for eliminating undesired organisms is based on the use of molecules that have a direct effect on the targeted organisms, whether they are adults or at the larval stage.

The term prevention is used to mean any method for eliminating and/or reducing the risks derived from the presence of organisms that infest the aqueous systems. More specifically prevention is intended as all the actions aimed at impeding and/or reducing the risk derived from non desired events.

There are different classes of insecticides that are used today, including those that are phospho-organic, chloro-organic and pyrethroid based. All of these chemical compounds are highly effective in eliminating the infesting insects and they act in a direct way on the targeted organisms, but they are also highly toxic; in fact, generally these insecticides, not only persist in the environment, accumulating in the food chain, but they can also be highly toxic for humans.

Within the category of products for the fight against the infesting agents there are also pesticides that regulate growth.

The function of these insecticides is to control the development of the adult insects through the killing of the eggs and/or the larvae of such insects. The use of these larvacides is localized in the environments where the eggs are deposited and develop. The classes of larvacides that are most widely used today are of two types:
1) chemical molecules;
2) bacteria that produce toxins that act on the eggs and/or on the larva.

These two classes of larvacides, like the insecticides described above, have a direct effect on the targeted organism, in that they are absorbed by the eggs and/or by the larvae thus causing their death.

These insecticides are also highly toxic for the environment and for humans. It has been verified, in fact, that the dispersion of these products in open systems has high toxicological and eco-toxicological effects.

GB 1561088 discloses a method for controlling the breeding of insects which have an aquatic phase in their life cycle. In particular, the method relates to the use of non-insecticidal, non-toxic and non-pollutive materials to deter the breeding of mosquitoes. The method can be based on the chemical in situ generation of carbon dioxide to generate the gas within an aqueous suspension of a foam forming material. The foam produced by this method is floating on the water surface and creating a physical barrier to the insects and their larvae. The foam forming material may be polysaccharides, polypeptides, polystyrenes or polyamides.

In order to control and evaluate the phytopharmaceuticals and the biocides before their introduction on the market, it has been necessary to introduce European laws (Directive 91/414/CEE and Directive 98/8CEE) that, through the imposition of tests evaluating the toxicological and environmental risks of the above mentioned categories of products, have reduced the number of products and/or have limited their use.

For all of these reasons, the development and the introduction on the market of technologies and/or innovative substances directed to control the infestations of undesired insects are highly desirable. Such intention is confirmed also by the possibility of having simplified registration procedures, even in terms of economic costs, that the Directives prescribe for low-risk products.

### Disclosure of the Invention

The aim of the present invention is to provide a method for preventing and controlling insects, their eggs and larvae that infest the aqueous systems which has characteristics of low toxicological and eco-toxicological impact.

This aim and other object, which will become better apparent hereinafter, are achieved by an eco-compatible method for preventing and controlling insects, their eggs and larvae that infest aqueous systems in which one or more inorganic compounds capable of releasing carbon dioxide are present, comprising the step of dispersing on and/or in the aqueous mass a preparation comprising enzymes adapted to catalyze a reaction of said one or more compounds that leads to the formation of carbon dioxide, wherein the enzyme preparation comprises enzymes selected from the group of lyases that belong to the subclass of carbonic anhydrases and wherein said one or more inorganic compounds capable of releasing carbon dioxide present in aqueous systems are selected from the group consisting of carbonate salts.

### Ways of carrying out the Invention

Further characteristics and advantages of the invention will become better apparent from the following detailed description of a preferred but non-exclusive embodiment of the method for preventing and controlling the insects, their eggs and larvae that infest the aqueous systems according to the present invention.

It has been developed a method for preventing and controlling insects, their eggs and larvae that infest the aqueous systems in which one or more inorganic compounds capable of releasing carbon dioxide are present, which comprises the step of dispersing on and/or in the aqueous mass a preparation, which can be on its own or dispersed in another medium, comprising enzymes adapted to catalyze a reaction of said one or more inorganic compounds that leads to the formation of carbon dioxide, wherein the enzyme preparation comprises enzymes selected from the group of lyases that belong to the subclass of carbonic anhydrases and wherein said one or more inorganic compounds capable of releasing carbon dioxide present in aqueous systems are selected from the group consisting of carbonate salts.

The products of the reaction create a continuous effervescence for a certain period of time, obtaining two effects directed to eliminate the infesting insects, their eggs and larvae:
1) repulsion mechanical effect;
2) biocide effect.

The kinetic movement obtained through the effervescence produced prevents the infesting insects from depositing the eggs, particularly as regards flying insects. Moreover, the obtained effervescence makes it more difficult for the eggs and/or larva to access the oxygen in the environment. The biocide effect, therefore, is obtained by causing the death of the eggs and/or larvae.

In other words, with the method according to the present invention, the biocide and repulsion effects are advantageously achieved by the products obtained by the reactions biocatalyzed by the enzymatic preparation made of elements that are already present in the environment, thus guaranteeing a low environmental impact and almost non-existent toxicological effects.

The method for preventing and controlling insects, their eggs and larvae that infest the aqueous systems is characterized by the fact that the enzymatic preparation contains enzymes that are selected from lyases which belong to the carbonic anhydrases subclass.

Preferably, the method for preventing and controlling organisms that infest the aqueous systems is characterized by the fact that the enzymatic preparation comprises enzymes in the range 0.0001-30.0% (w/w), even more preferably 0.0001-5% (w/w), and even more preferably 0.0001-0.010% (w/ w).

In other words, the enzymatic preparation comprises enzymes in the range between 10 and 500000 U/m², preferably between 100 and 50000 U/ m², and more particularly between 500 and 25000 U/m².

The method for preventing and controlling insects, their eggs and larvae that infest aqueous systems is characterized by the fact that one or more inorganic compounds capable of releasing carbon dioxide present in the aqueous systems are selected from the group consisting of carbonate salts.

The gas released is CO₂, which is eco-compatible, has a low environment impact and a low toxicological risk.

Preferably, the method for preventing and controlling insects, their eggs and larvae that infest the aqueous systems is characterized by the fact that the enzymatic preparation further comprises buffers selected from the group consisting of borate, phosphate, acetate, citrate, sulfate buffers; in a preferred embodiment the above mentioned enzymatic preparation further comprises:
i) binders for the powder formulation which are selected from the group consisting of lignosulfonates, methylcellulose, carboxymethylcellulose, talc, stearic acid, magnesium and calcium stearates, polysaccharides with acid functions that are salified with magnesium, potassium and calcium, consisting of arabinose, D-galactopyranose, ramnopyranose and D-glucuronic acid; and/or
ii) antioxidants selected from the group consisting of ascorbic acid, a mixture of butylhydroxytoluene, butylhydroxyanisole, and hexylene glucol, 4-hydrobenzoic acid methyl esters, sodium hydrosulfite and bisulfite, tocopherols, alkyl-gallates, 2-phenoxyethanol, sucrose, glucose, dextrose, sugars; and/or
iii) stabilizers selected from the group consisting of citric acid and tartaric acid; and/or
iv) substances that absorb humidity which are selected from the group consisting of glycerol, silica gel, clay, calcium sulfate, magnesium sulfate, sodium thiosulfate, sucrose; and/or
v) sources of gas selected from inorganic salts including carbonate salts, nitrate, nitrite, sulfite, sulfate, phosphite and phosphate; and/or
vi) a mixture of the above mentioned compounds.

Preferably the method according to the present invention further comprises a source of CO₂ in the preparation.

Preferably the method according to the present invention comprises a composition containing a mixture of substances for controlling the pH of the environment in which the product is distributed. This method consists in adding a buffer in order to regulate the pH of the aqueous environment to values at which the activity of the enzyme is at a maximum. The buffer solutions are solutions that act against pH variations through small additions of acids and bases. They are usually solutions of a weak acid and its salt with a strong base or, vice versa, of a weak base and its salt with a strong acid or also of a salt, a weak base and a weak acid of acids and bases that are strongly concentrated.

Buffer solutions are widely used in analytical chemistry and in those processes where it is useful or necessary to stabilize the pH at a desired value. A peculiar characteristic of this type of solution is the buffering power, commonly defined as the amount of strong acid or base to be added to a buffer solution to obtain a unitary pH variation.

Preferably, the method for preventing and controlling insects, their eggs and larvae that infest the aqueous systems is characterized by the fact that the enzymatic preparation is inserted in a solid and/or liquid and/or aerosol formulation: preferably said solid formulation is selected from the group consisting of powder and/or tablets and/or pellets.

In a preferred embodiment, the method for preventing and controlling insects, their eggs and larvae that infest the aqueous systems is characterized by the fact that the aqueous systems are areas that are characterized by stagnant water at the surface and/or below ground selected from the group consisting of damp areas, rice fields, stagnant water for farming and other uses, stagnant water contained in vessels, containers for collecting and/or accumulating rainwater, sewage systems, manholes, puddles, cavities of trees.

Examples of formulations according to the present invention are:
- product in powder form consisting of:
   a. carbonic anhydrases 0.0001%;
   b. calcium carbonate 50%;
   c. tris sulfate buffer 1%;
   d. mixture of butylhydroxytoluene, butylhydroxyanisole and hexylene glycol 5%; H e
   e. calcium sulfate 2%;
   f. talc as needed at 100%;
- product in tablet/pellet form consisting of:
   a. carbonic anhydrases 1%;
   b. stearic acid 5%;
   c. ascorbic acid 5%;
   d. methylcellulose 20%;
   e. calcium sulfate 5%;
   f. calcium carbonate 10%;
   g. phosphate buffer 5%;
   h. talc as needed at 100%;
- product in liquid form consisting of:
   a. carbonic anhydrases 0.001%;
   b. tris sulfate buffer 5%;
   c. 4-hydroxybenzoic methyl ester acid 5%;
   d. deionized water as needed at 100%.

The quantities of the enzyme indicated in the present description regard the active enzyme and the percentages are weight percentages.

The presence of the activity of the enzyme in an "ideal" system consisting of distilled water and buffer, and in a "real" system consisting of water gathered from the environment, like rainwater, and buffer, was determined in two ways:
1) SPECTROPHOTOMETRIC METHOD: A simple spectrophotometric method takes advantage of the capability of the enzyme to hydrolyze a synthetic substrate (p-nitrophenyl-acetate) producing a product (p-nitrophenol) that has a maximum absorbance at 348nm. This method allows to study the kinetics of the hydrolysis reaction.

The efficiency of the enzyme, therefore, has been tested in an aqueous environment (rainwater) and it has been shown through the comparison of its activity towards a reference substrate in a standard environment and its activity towards the same substrate in rainwater.

These experiments were carried out using the carbonic anhydrases enzyme from bovine erythrocytes (stock 0.04%, 1000 U/mL). The enzymatic activity has been tested in rainwater and compared with the activity of the same enzyme in a tris sulfate buffer.

In order to perform this, two sample solutions were prepared starting from a stock tris sulfate buffer solution 15mM (pH 7.6) which is diluted, respectively, with deionized water and rainwater, reaching a concentration of tris sulfate of 10mM in both cases. The activity of 50U of enzyme (final concentration 0.002%) has been tested for both samples with the spectrophotmetric method described above.

The results of the enzymatic activity are the following:
Activity after 10 minutes:

| **Buffer + Deionized water (-enzyme)** | **Buffer + Rainwater (-enzyme)** |
|---|---|
| 0 | 0.00084 |

| **Buffer + Deionized water (+enzyme)** | **Buffer + Rainwater (+enzyme)** |
|---|---|
| 0.0678 | 0.0545 |

Activity after 1 hour:

| **Buffer + Deionized water (+enzyme)** | **Buffer + Rainwater (+enzyme)** |
|---|---|
| 0.0643 | 0.0498 |

Activitv after 15 hours:

| **Buffer + Deionized water (-enzyme)** | **Buffer + Rainwater (-enzyme)** |
|---|---|
| 0.0518 | 0.0375 |

In terms of percentages compared to the "ideal" solution (no rainwater):
- Activity of the enzyme after 10 minutes: 80.38%
   Activity of the enzyme after 1 hour: 77.45%
   Activity of the enzyme after 15 hours: 72.39%

2) GAS CHROMATOGRAPHIC METHOD: Another method for detecting the enzymatic activity consists in measuring the quantity of CO₂ that is released following the dehydration of the carbonic acid formed in the presence of carbonates. This can be measured through gas chromatography (GC). The reaction of dehydration is favored compared to the inverse reaction in a solution with a pH between 5.5 and 7.5. With this method, therefore, it is possible to determine the enzymatic capability of producing CO₂ by way of the catalysis of the decarboxylation reaction of HCO₃⁻ anions through the measurement of gas produced with the gas chromatography method.

Samples have been prepared according to the methodology described by R. Waygood in Methods in Enzymology (vol. II, Academic Press, 1955). The formation of CO₂ was measured 5 minutes after the addition of the enzyme by injecting in the GC 500µL of the air present in the head space.

It is possible to determine the % of CO₂ present in each sample by calculating the area of the corresponding peaks and using a calibration curve created with known gas percentages.

The carbonic anhydrase from bovine erythrocytes at a final concentration of 0.06% (5000 units) was tested to evaluate the capability of producing CO₂ from rainwater, with the addition of a tris-HCl buffer 0.1M pH 7.2 and carbonate solution.

### Results of the experiments:

| | **Peak Area** | **Percentage (%)** |
|---|---|---|
| **Ideal system (-E)** | 41561 | 0.62 |
| **Rainwater *(-E)** | 43846 | 0.65 |
| **Ideal system (+E)** | 142575 | 2.12 |
| **Rainwater *(+E)** | 159625 | 2.37 |

| | | |
|---|---|---|
| E=enzyme Ideal system= tris-HCl buffer 0.1M pH 7.2 and carbonate solution *= rainwater with addition of tris-HCl buffer 0.1M pH 7.2 and carbonate solution. | | |

The production of CO₂ that occurred in rainwater wherein the enzyme is present is 3.65 times greater than in rainwater without the enzyme.

The fact that the CO₂ produced from the rainwater system + enzyme is greater than the CO₂ produced from the ideal system + enzyme shows that the enzyme also uses as a substrate the inorganic salts present in this medium.

Two non-exhaustive examples of products compositions and efficiency tests of said products are described hereinafter, which illustrate the object of the invention.

### EXAMPLES OF PRODUCT AND EFFICIENCY TESTS

### EXAMPLE 1

### Product composition

| SAMPLE 1 | CAS substance | Quantity Udm | Concentration % of components |
|---|---|---|---|
| Sodium bicarbonate | 144-55-8 | 2.2 gr | 14.18623 |
| Enzyme* (equal to 20000 U) | 9001-03-0 | 0.008 gr | 0.051586 |
| Na₂HPO₄ (phosphate | 7558-79-4 | 6.8 gr | 43.84834 |
| buffer pH 6.8) | | | |
| KH₂PO₄ (phosphate buffer pH 6.8) | 7778-77-0 | 6.5 gr | 41.91385 |
| Total | | 15.508 gr | 100 |

| | | | |
|---|---|---|---|
| *carbonic anhydrase from bovine erythrocytes. | | | |

### Efficiency test

The product was tested to verify the efficiency regarding:
1) the reduction of the number of eggs deposited
2) the reduction of the number of eggs opened as an adult
3) other factors limiting the proliferation of the mosquitoes.

The tests were conducted in a cage protected by ventilated netting in which the beakers that acted as a reproduction of stagnant water were placed. The beakers contained 800mL of water and the surface area available for depositing eggs is 190 cm².

The mosquitoes were fed with blood in order to promote egg deposition. They were left to get used to the environment for 1 day, after which time the product was poured in the beaker. Subsequent additions of bicarbonate were made every 24 hours.

Duplicate tests were done and each duplicate was verified with a control beaker in which the product was not added.

### Results at 3 days

| | Eggs deposited | Dead mosquitoes |
|---|---|---|
| Product | 200 | 11 |
| Control | 3000 | 2 |

| | | |
|---|---|---|
| Reduction in number of eggs deposited → 93% Increase in mosquito mortality → 5.5 times | | |

### Results at 7 days

| | Number of larvae present |
|---|---|
| Product | 0 |
| Control | 2500 |

### Results at 23 days

| | Number of adult mosquitoes formed from the larvae |
|---|---|
| Product | 0 |
| Control | 2200 |

### EXAMPLE 2

### Product composition

| SAMPLE 2 | CAS substance | Quantity | Concentration % of components |
|---|---|---|---|
| Carbonate | 471-34-1 | 40 gr | 75.03564 |
| Enzyme* | 9001-03-0 | 0.008 gr | 0.015007 |
| Na₂HPO₄ (phosphate buffer pH 6.8) | 7558-79-4 | 6.8 gr | 12.75606 |
| KH₂PO₄ (phosphate buffer pH 6.8) | 7778-77-0 | 6.5 gr | 12.19329 |
| Total | | 53.308 gr | 100 |

| | | | |
|---|---|---|---|
| * = carbonic anhydrase from bovine erythrocytes. | | | |

### Efficiency test

The product was tested to verify the efficiency regarding:
1) the reduction of the number of eggs deposited
2) the reduction of the number of eggs opened as an adult
3) other factors limiting the proliferation of the mosquitoes.

The tests were conducted in a cage protected by ventilated netting in which the beakers that acted as a reproduction of stagnant water were placed. The beakers contained 800mL of water and the surface area available for depositing eggs is 190 cm².

The mosquitoes were fed with blood in order to promote egg deposition. They were left to get used to the environment for 1 day, after which time the product was poured in the beaker.
Duplicate tests were done and each duplicate was verified with a control beaker in which the product was not added.

### Results at 3 days

| | Eggs deposited | Dead mosquitoes |
|---|---|---|
| Product | 100 | 15 |
| Control | 2900 | 2 |

| | | |
|---|---|---|
| Reduction in number of eggs deposited → -96.56% Increase in mosquito mortality → 7.5 times | | |

### Results at 7 days

| | Number of larvae present |
|---|---|
| Product | 0 |
| Control | 2000 |

### Results at 23 days

| | Number of adult mosquitoes formed from the larvae |
|---|---|
| Product | 0 |
| Control | 2100 |

## Claims

1. An eco-compatible method for preventing and controlling insects, their eggs and larvae that infest aqueous systems in which one or more inorganic compounds capable of releasing carbon dioxide are present, comprising the step of dispersing on and/or in the aqueous mass a preparation comprising enzymes adapted to catalyze a reaction of said one or more compounds that leads to the formation of carbon dioxide, wherein the enzyme preparation comprises enzymes selected from the group of lyases that belong to the subclass of carbonic anhydrases;
and
wherein said one or more inorganic compounds capable of releasing carbon dioxide present in aqueous systems are selected from the group consisting of carbonate salts.

2. The method according to claim 1, wherein the enzyme preparation comprises enzymes in the range 0.0001-30.0% (w/w).

3. The method according to claim 2, wherein the enzyme preparation comprises enzymes in the range 0.0001-5.00% (w/w), preferably 0.0001-0.010% (w/w).

4. The method according to one or more of the preceding claims, wherein the preparation further comprises a source of CO₂.

5. The method according to one or more of the preceding claims, wherein the composition comprises a mixture of substances for controlling the pH of the environment in which the product is distributed.

6. The method according to claim 1, **characterized in that** the enzyme preparation is selected from the group consisting of a solid and/or liquid and/ or aerosol formulation.

7. The method according to claim 6, wherein the solid formulation is selected from the group consisting of powder and/or tablets and/or pellets.

8. The method according to claim 1, **characterized in that** the aqueous systems are selected from the group consisting of damp areas, rice fields, stagnant water for farming and other uses, stagnant water contained in vessels, containers for collecting and/or accumulating rainwater, sewage systems, manholes, puddles, cavities of trees.

## Patentansprüche

1. Umweltverträgliches Verfahren zur Vorbeugung gegen und zur Bekämpfung von Insekten, ihren Eiern und Larven, die wässrige Systeme befallen, in denen eine oder mehrere anorganische Verbindungen vorhanden sind, die Kohlenstoffdioxid freisetzen können, das den Schritt des Dispergierens auf und/oder in der wässrigen Masse einer Zubereitung umfasst, die Enzyme umfasst, die eine Reaktion der einen oder mehreren Verbindungen katalysieren können, die zur Bildung von Kohlenstoffdioxid führt, wobei die Enzymzubereitung Enzyme umfasst, die aus der Gruppe der Lyasen ausgewählt sind, die zur Unterklasse der Carboanhydrasen gehören; und wobei diese eine oder mehreren in wässrigen Systemen vorhandenen anorganischen Verbindungen, die Kohlenstoffdioxid freisetzen können, aus der Gruppe ausgewählt sind, die aus Carbonatsalzen besteht.

2. Verfahren nach Anspruch 1, wobei die Enzymzubereitung Enzyme im Bereich von 0,0001-30,0 Gew.-% umfasst.

3. Verfahren nach Anspruch 2, wobei die Enzymzubereitung Enzyme im Bereich von 0,0001-5,00 Gew.-%, vorzugsweise 0,0001-0,010 Gew.-%, umfasst.

4. Verfahren nach einem oder mehreren der vorhergehenden Ansprüche, wobei die Zubereitung ferner eine CO₂-Quelle umfasst.

5. Verfahren nach einem oder mehreren der vorhergehenden Ansprüche, wobei die Zusammensetzung ein Gemisch von Stoffen zum Steuern des pH-Werts der Umgebung umfasst, in der das Produkt verteilt wird.

6. Verfahren nach Anspruch 1, **dadurch gekennzeichnet, dass** die Enzymzubereitung aus der Gruppe ausgewählt ist, die aus einer festen und/oder flüssigen und/oder Aerosol-Formulierung besteht.

7. Verfahren nach Anspruch 6, wobei die feste Formulierung aus der Gruppe ausgewählt ist, die aus Pulver und/oder Tabletten und/oder Pellets besteht.

8. Verfahren nach Anspruch 1, **dadurch gekennzeichnet, dass** die wässrigen Systeme aus der Gruppe ausgewählt sind, die aus Feuchtgebieten, Reisfeldern, Stillgewässern für die Landwirtschaft oder andere Verwendungen, stehendem Wasser in Kesseln, Behältern zum Sammeln und/oder Speichern von Regenwasser, Abwassersystemen, Kanalschächten, Tümpeln und Baumlöchern besteht.

## Revendications

1. Procédé éco-compatible pour prévenir et contrôler des insectes, leurs oeufs et larves qui infestent des systèmes aqueux dans lesquels un ou plusieurs composés inorganiques capables de libérer du dioxyde de carbone sont présents, comprenant l'étape de dispersion sur et/ou dans la masse aqueuse d'une préparation comprenant des enzymes adaptés pour catalyser une réaction desdits un ou plusieurs composés qui conduit à la formation de dioxyde de carbone, dans lequel la préparation d'enzymes comprend des enzymes sélectionnés à partir du groupe de lyases qui appartiennent à la sous-classe d'anhydrases carboniques; et dans lequel lesdits un ou plusieurs composés inorganiques capables de libérer du dioxyde de carbone présents dans les systèmes aqueux sont sélectionnés à partir du groupe composé de sels de carbonate.

2. Procédé selon la revendication 1, dans lequel la préparation d'enzymes comprend des enzymes dans la plage de 0,0001-30,0% (pourcentage en masse).

3. Procédé selon la revendication 2, dans lequel la préparation d'enzymes comprend des enzymes dans la plage de 0,0001-5,00% (pourcentage en masse), de préférence 0,0001-0,010% (pourcentage en masse).

4. Procédé selon une ou plusieurs des revendications précédentes, dans lequel la préparation comprend en outre une source de CO₂.

5. Procédé selon une ou plusieurs des revendications précédentes, dans lequel la composition comprend un mélange de substances pour contrôler le pH de l'environnement dans lequel le produit est distribué.

6. Procédé selon la revendication 1, **caractérisé en ce que** la préparation d'enzymes est sélectionnée à partir du groupe composé d'une formulation solide et/ou liquide et/ou d'aérosol.

7. Procédé selon la revendication 6, dans lequel la formulation solide est sélectionnée à partir du groupe composé de poudre et/ou comprimés et/ou granulés.

8. Procédé selon la revendication 1, **caractérisé en ce que** les systèmes aqueux sont sélectionnés à partir du groupe composé de zones humides, rizières, eau stagnante pour l'agriculture et autres usages, eau stagnante contenue dans des récipients, conteneurs pour recueillir et/ou accumuler l'eau de pluie, systèmes d'égouts, regards de visite, flaques d'eau, cavités d'arbres.
